# EUROPEAN PATENT APPLICATION

(11) **EP 0 588 101 A2**
(43) Date of publication of application: **23.03.1994**
(21) Application number: 93113370.6
(22) Date of filing: 20.08.1993
(51) Int. Cl.: H04M 3/50, H04Q 3/72

(54) **Message storage and retrieval systems employing selective caller processing**

(30) Priority: 14.09.1992 US 944589
(71) Applicant: ROLM COMPANY, Santa Clara, CA 95052 (US)
(72) Inventor: Goldman, Eileen R., Cupertino, CA 95014 (US); Wu, Solomon, Milpitas, CA 95035 (US)
(74) Representative: Fuchs, Franz-Josef, Dr.-Ing.

(57) **Abstract**

There is disclosed a voice message system (104) that employs the automatic number identification, ANI, associated with a calling party. This information is transmitted from a switching system, such as a private branch exchange (102) or central office to the voice message system (104). The calling party's ANI is transferred and stored in an ANI register (111) of the voice message system and is compared with pre-stored numbers contained in a memory and selectively entered therein by a voice message subscriber. If a favorable comparison is made between the stored ANI and a number stored in memory, as inserted by the subscriber, a number of unique control features will be implemented by the system based on the confirmation that the ANI number, as derived from the calling party, compares favorably with the stored number entered by the system subscriber. In this manner the system, by making such a favorable comparison, can now implement special features whereby the message stored by the calling party will receive a priority status. One special feature is controlled playback to the subscriber representing an urgent message status for desired calling party priority. The subscriber can further implement message playback whereby the calling party's actual name is announced to the subscriber during the playback of the message. In another special feature, the subscriber can receive his voice mail or messages from a number of locations other than the subscriber's actual extension, which numbers are stored in memory as entered by the subscriber. In another special feature, the subscriber can implement greetings whereby the calling party receives a greeting recorded specifically for them. In yet another special feature, the subscriber can initiate a callback to the original calling party by pressing a single digit.

## Description

### Field of the Invention

This invention relates to message storage and retrieval systems in general and more particularly to such a system which enables implementation of a unique control or processing feature according to the calling telephone number.

### Background of the Invention

During the last two decades, architecture and standards for telephone networks which are dedicated to voice and/or data have been established worldwide. Such networks are sometimes referred to as integrated digital networks (IDNs) where the term integrated refers to the commonality of digital techniques used in the transmission and switching systems. In view of this and in view of many other aspects, there now are a host of systems which provide various features enabling more efficient communications between subscribers.

A very useful system feature which has been developed in the last few years regards the storing and playback of voice messages. Such systems are in widespread use and are commonly referred to as message storage systems or voice mail systems. Thus, such message systems of different types are well known in the prior art. For example, normal call answering equipment as an answering machine is connected to a telephone customer's line and intercepts incoming calls with a pre-recorded announcement, the equipment records any message which a calling party wishes to have delivered to the called customer and when instructed to do so plays back any messages recorded for the called customer. Such equipment has been located at the central office and such equipment also can be implemented in private branch exchanges or other switching systems or can be implemented as a separate system to be added to a PBX and are referred to as voice mail or voice message systems. For a prior art voice message system, see U.S. Patent No. 4,221,933 entitled "Data Storage and Retrieval Structure for a Message Storage System" issued on February 9, 1980 to Cornell et al. and assigned to Bell Telephone Laboratories.

In combination with voice message operation, there are other features which are employed in modern-day telephony systems. A very popular feature which is utilized in many modern telephone systems, is sometimes referred to as automatic number identification (ANI). The ANI provides the billing number of a calling party in the U.S.A., which number includes a three digit area code and a seven digit telephone number. The ANI number is available to the switching system as the calling party's number, to which number the call charges are debited and through which number the called party is connected to the calling party. The ANI has been employed in telephone systems to enable a called party to identify the calling party by actually receiving the calling party's telephone number on a separate display or by command. The ANI is transferred by the PBX or central office to the called party upon command or automatically. Thus, the ANI has been utilized to enable the elderly or other members of our society to automatically receive the entire telephone number of the calling party. This feature is used to prevent crank or nuisance calls and also used as a positive means of screening telephone calls.

Thus, the telephone number of the calling party or the ANI has been known and used in telephone switching systems for the above conventional purposes. As indicated, this information is necessary first, to connect a calling party to a called party and second, to provide billing information. Based on modern switching techniques, the ANI is transferred to other switching systems and as indicated can be transferred to the called party directly. Thus, the ANI is readily available in such modern-day switching systems and is transferred via trunks or links as is conventional.

The present invention describes various methods and apparatus which enable subscribers with access to a voice processing system to employ the ANI to implement various processing features which greatly enhance and improve the system operation.

### Summary of the Invention

A voice message system subscriber can selectively access a memory where desired calling party numbers (ANI) are entered by the subscriber. Subsequently, when a calling party is connected to the message system, his ANI is transferred to the system via the private branch exchange (PBX) or central office (CO). The ANI is compared with the stored numbers and if a favorable comparison is made then the calling number or the message left by the calling party is handled according to a unique feature format. Thus, upon a favorable comparison, the calling party may receive priority treatment where the message left by this party is played back before the playback of other non-listed calling party numbers. The playback of such numbers can be designated as urgent or can include the announced name of the calling party. The stored numbers can also enable the subscriber to receive voice messages from locations other than his desk or actual extension by comparing stored numbers with the ANI.

### Brief Description of the Figures

For a better understanding of the present invention, reference is made to the following description of an exemplary embodiment thereof, considered in conjunction with the accompanying drawings, in which:
FIG. 1 is a block diagram of a message storage and retrieval system employing selective caller processing whereby calling parties can receive a priority according to the selection by a subscriber to the system;
FIG. 2 is an alternate embodiment of a message storage and retrieval system employing a subscriber selected urgent message feature;
FIG. 3 is an alternate embodiment showing a message storage and retrieval system implementing an additional system feature; and
FIG. 4 is a block diagram of a message storage and retrieval system employing still another selective processing feature.
FIG. 5 is a block diagram of an alternate embodiment depicting a message storage and retrieval system implementing another selective processing feature.
FIG. 6 is a block diagram of a message storage and retrieval system employing a callback feature.

### Detailed Description of the Drawings

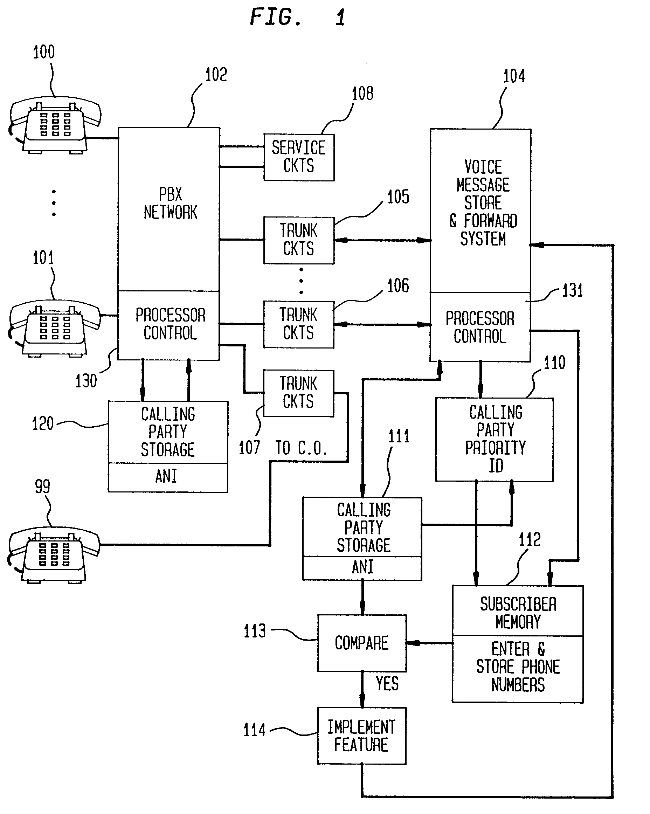

FIG. 1 is a block diagram of an illustrative message storage system 104 designated as a phone mail system which operates in conjunction with a PBX 102 or private branch exchange network system. The PBX network 102 and the voice message or voice mail system 104 are generally processor controlled. Thus, each system includes a processor or CPU or a plurality of such processors, as processor controllers 130 for the PBX network 102 and processor controller 131 for the voice message system 104. As seen in FIG. 1, a plurality of subscribers, such as 100 and 101 are each associated with a telephone subset or telephone facility and are connected to the PBX network 102 via respective line circuits. The PBX network 102, as will be explained, is a private branch exchange of the type manufactured and distributed by many different companies. While the system is being described in conjunction with a PBX network 102, it is of course understood that any type of switching system can be utilized to operate in conjunction with this invention. It is a major aspect of the present invention to operate with a voice message or voice mail system 104. The system 104 is a message storage system or voice mail system, which systems are well known, and many examples of which exist in the prior art. Basically, as one will understand, in the United States the term private branch exchange (PBX) as the PBX network 102 refers generically to any switching system which is owned or leased by a business or organization to provide both internal switching functions and access to the public network. Thus, a PBX in the United States may use either manual or automatic control. The term PBX is also used to refer specifically to automatically controlled PBX's. In any event, PBX systems or PBX networks, as 102, are extremely varied and may operate in many different modes and by many different architectures to connect subscribers such as 100 and 101 to other subscribers or to connect them through trunk circuits or links such as 105 and 106 to a voice message storage or other processing system 104. The PBX network 102 can also connect to outside switching networks or central offices via the links or trunks 107, or to other switching systems, such as those systems supplied by major carriers, and eventually to telephone/terminal devices such as 99.

It is a major function of any switching network to connect a calling terminal or party to a called terminal or party. This essentially is a basic function of a switching system. The calling party is associated with a telephone number which, as indicated, is referred to as an automatic number identification or ANI and this represents the billing number of the calling party. The ANI includes a three digit area code and a seven digit telephone number in the U.S.A. Thus, each subscriber, such as 99, has a ANI associated therewith. As explained, this number is used by the PBX network 102 or by the telephone systems in general and is normally stored therein for internal purposes.

The module 120 is connected to the PBX network and is referred as the calling party storage ANI. Module 120 is a storage register or other storage device which receives the telephone number (ANI) of a calling party during each telephone call and can store this number for use by the PBX network 102 or transmit the ANI number as requested via the trunk circuits 105, 106 and 107 to the voice message system 104 or to other systems, as indicated. For example, on an integrated PBX and voice message system, the ANI is available and can be placed or inserted in the message header when the caller leaves a message. There are, of course, in existence many different types of voice message systems, such as system 104, and each system may operate in a different way but basically the modes of operation are relatively the same, in that messages are stored and forwarded at the request of subscribers and calling parties.

As will be described, an aspect of the present invention is to enable the system 104 to receive the calling party ANI and store the same in a register 111. Thus the ANI number of the calling party is automatically transferred via a trunk circuit or other link to the voice message system 104 where the number may be stored in a register 111. By storing and having access to the ANI number, many functions can be implemented by the voice message system 104, as will be explained. As further shown in FIG. 1 there is a module 110 designated as Calling Party Priority ID which module interfaces with the calling party or ANI storage register 111 and further interfaces with a subscriber memory 112. The functions of the memory 112, as well as the various modules, will be further described.

In any event, the voice message system 104, has the ability to accept and store various telephone numbers in memory as well as to accept and store various commands from subscribers 100 or 101 who are connected to the PBX 102. For examples of systems which can operate accordingly, reference is made to the Rolm CBX9751 system. This is a system sold and marketed by Rolm of Santa Clara, California 95054. This system can be utilized in regard to the PBX network 102 and is completely compatible with the ROLM PhoneMail system which can be utilized as system 104. The CBX9751 system supports ANI and is capable of passing the ANI information to the phone mail system 104 through the trunk circuit 105 or through what is designated as a RS-232 link. The ANI number then transferred is stored in the calling party's storage register 111 by the voice mail system 104. Voice mail systems as 104 provide single digit identification of a subscriber. Hence, when a subscriber calls the voice mail system from a proper extension they can receive stored messages by pressing a single digit key, such as the # key on a telephone and then by dialing a private identification number or pin number (PIN). By so doing, the subscribers can receive stored messages. This is sometimes referred to as a voice mailbox feature, where each system subscriber has a private "mailbox" or storage section which the subscriber accesses by his own "key" or PIN number. This number is dialed by the subscriber and verified by the system to be a valid number to enable access to the voice "mailbox".

It is of course understood that the above-described combination of systems enables the ANI number to be transferred from the PBX network 102 to the voice mail system 104. This number is stored in the voice mail system 104 in a register 111 or by other means. The storage of this number in register 111 enables the system to now provide many features which are extremely desirable for system subscriber use.

Essentially, a customer such as represented by the subscriber station 101 who wishes to access the voice mail system will go off hook. By going off hook the PBX network will recognize a service request and send dial tone via the service circuits 108. Upon receipt of dial tone, the subscriber 100 can then dial in a number or a code which is then translated by the PBX system 102, and which code is recognized as a request for a connection to the voice mail system 104. This can be done by either examining the digits dialed by the subscriber and looking for the specific code by using a translator similar to translators described in many references.

In response to the connection request, the PBX 102 seizes a trunk circuit 105 or a link 106 and connects the subscriber 100 to the voice mail system 104. Once the subscriber is connected to the voice mail system 104, the voice mail system can either send the subscriber a voice mail dial tone or another signal whereupon the subscriber can press the # key or some other key, dial his PIN (private identification number) and have his stored messages played back to him. In the present operation the subscriber's 100 calling party ID is also transmitted to the voice mail system 104 via the PBX 102 where it is stored in the calling party's storage register 111. As one can ascertain, when any subscriber 100 accesses the voice mail system 104, apart from message play back, he can request a variety of other services which can be implemented conveniently by the voice mail system 104, according to subscriber dialed codes.

In FIG. 1 there is shown a calling party priority ID register 110. Basically, as indicated above, the register 110 will receive the PIN number of subscriber and verify that the subscriber is an authorized party by verifying the correct PIN number. The system can also correlate the PIN number of the party with the calling party's storage number, as stored in register 111. The system also knows that subscriber location 100 and the given PIN number. The system can therefore identify that the subscriber is a valid party. In this manner, as will be further explained, upon receipt of a proper PIN number the system will validate the subscriber. The subscriber can now request his message playback as indicated above or can dial a further number which will enable the subscriber to perform different system functions.

By dialing an additional number, the subscriber 100 gains access to a subscriber memory 112. He can now enter telephone numbers into the memory 112 which telephone numbers may represent numbers of desired calling parties or may represent telephone numbers at which the subscriber may wish to receive messages at locations other than his extension 100 or it may represent, for example, message storage memory where the subscriber can leave a predetermined message for a given calling party. Essentially, as will be explained, the telephone numbers which the subscriber enters into memory 112, as selected by each subscriber. These numbers, for example, may be the number of a known calling party, such as the subscriber's spouse or the subscriber's boss. Each stored number in memory 112 is compared with the ANI as stored in register 111. If a favorable comparison is made via comparator 113, the system will provide a feature 114 in accordance with this comparison which will enable the calling party to receive priority in message playback and so on.

It is of course understood that other additional features can be employed by using the ANI number as stored in register 111 and comparing this number with numbers that are dialed in by each subscriber. These numbers are indicative of caller numbers that the subscriber wishes to be selectively handled by the voice message system 104.

There will now be described such features which the system can implement by use of the calling party's ANI and which operation can be initiated by any party not always a subscriber as 99 and 101 who wishes to use the feature. The features will be described in certain sequences although other operations or sequence of events can be accommodated as well.

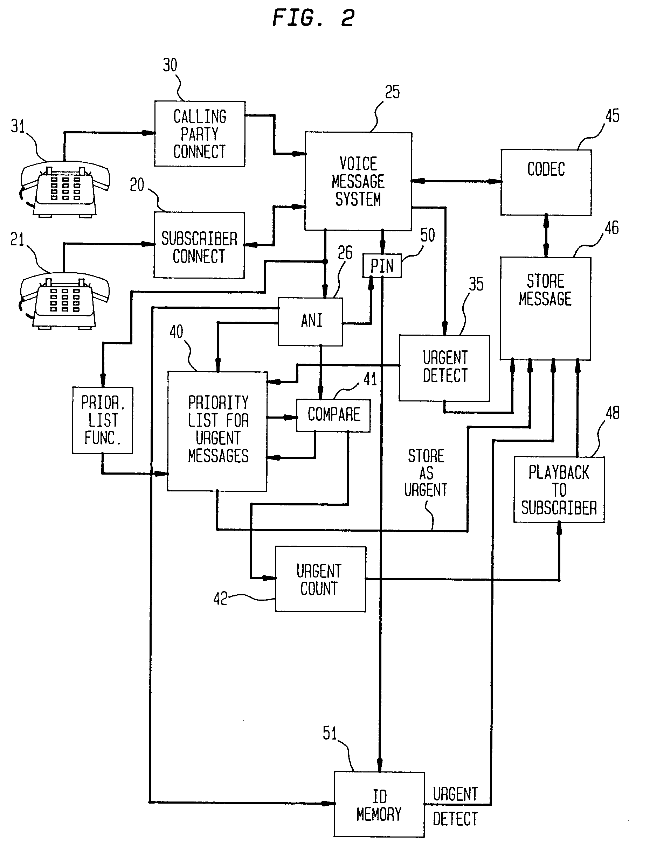

Referring to FIG. 2, there is shown a simple block diagram explaining the operation of one feature or special operating mode provided by the present invention. FIG. 2 shows apparatus and a typical method of using the ANI information to prioritize incoming messages according to the subscriber's selection using the voice processing or phone mail system 25. Thus a first subscriber is represented by a touchtone or DTMF subset 21 and has accessed the voice mail system 25 by means of the PBX network 102 or a central office, as previously described. This connection is indicated as subscriber connection 20. The PBX network simultaneously transmits the ANI number to the voice mail system 25 which number is stored in register 26. It is understood that any calling party's number, or ANI, is automatically stored by the voice mail system 25 in a register 26. This storage takes place for any calling party, whether it be the subscriber 20 or a remote calling party 30. It is understood that all subscribers or calling parties connected to the system 25 have the calling party ID stored in a register as 26. Thus, single calling and called party are discussed but multiple parties are accommodated by the system.

The system operates as follows. The subscriber 21 is connected to the voice mail system 25 by means of the PBX or any other switching system, as is applicable. The voice mail system 25 notifies the subscriber 20 that a connection to the voice mail system has been made. This can be implemented by a unique dial tone or by a voice prompt or otherwise. The subscriber 21 can now dial in a code via his subset indicative of a playback of stored messages or can access the system via additional codes to enable the system to respond to subscriber dialed-in information. For example, the subscriber 21 can change his pre-recorded message or can store certain telephone numbers or perform other operations which are associated with the voice mail system 25.

Many voice mail systems 25 have the ability to detect an urgent message request by a calling party via an urgent message detector 35. In this manner each subscriber, as subscriber 20, can inform all parties who call the system, such as party 30, of an urgent message code. This urgent message code may be, for example, a desired number of digits which a calling party as 30 can dial on his subset 31 after connection to the voice mail system 25. The voice mail system, via detector 35, recognizes the digits dialed by the calling party and therefore confirms the fact that the message to be recorded is deemed to be urgent to thus notify the called party. The calling party's message is normally stored in module 46 and can be stored in analog or digital form. The storage of voice messages in general is well known in the telephone art and many different examples of message storage exist. Thus apparatus 46 for so doing is conventional. When the message is specified as urgent, the voice mail system will play the message back before other regular messages when the called subscriber 20 accesses the system for message playback. This is a prior art approach.

According to the present invention a system subscriber 21 enters in the memory 40 a priority list of telephone numbers for urgent message purposes. In this manner, the subscriber 20 accesses the voice mail system 25 and proceeds to dial in a series of telephone numbers which will constitute a priority list for urgent messages. There are many ways that this can be accommodated. One way is that the subscriber 20, when connected to the voice mail system, will immediately dial in his personal identification number 50 followed by an urgent message priority list request. The list request may be a series of digits or a single digit, which the subscriber may first dial. These digits are recognized by the system 25 as a request for access to memory 40 for dialing in the list. The PIN number 50 is compared in an ID memory 51 with the subscriber's location at the switchboard or with his ANI number as stored in module 26. As one can ascertain, each subscriber as 21 will have a separate PIN number which distinguishes him from all other subscribers. In this manner, the subscriber 21 can now access the priority list memory 40 after the system ascertains that subscriber 21 has correctly dialed in the correct PIN number 50. When this occurs, the voice mail system will now transmit to the subscriber a pre-recorded or stored message which is stored in module 46.

Essentially the voice mail system has acknowledged the fact that a valid subscriber 20 desires to enter telephone numbers which will formulate a list of higher priority callers. The voice mail system, via the stored message module 46, now plays back over the connected telephone line a prompt which for example may be as follows -- "Please enter the telephone number for urgent message callers followed by the depression of the pound key." After the subscriber enters the telephone number and the pound sign, the system, via storage message 46, issues another prompt as -- "Please enter another telephone number and when finished push the pound key." The above scenario is extremely similar to the way a typical telephone systems allows a subscriber to enter a list of telephone numbers for providing a distribution list or for memory dialing. In any event, the procedure for doing so is well known. In this way, each of the telephone numbers that the subscriber dials in, formulating the priority list, enters a memory 40 where each number is stored. Thus, there is now stored a priority list which indicates that if a caller having a number stored in memory 40 issues a message then this message is to be played back to the subscriber before any other received messages. In this manner the subscriber will in fact obtain urgent messages as rapidly as possible from desired callers. Moreover, the system will also provide an indication to the subscriber that an urgent message has been received. The system can, via the priority list, also provide to the subscriber an indication of how many urgent messages have been received.

Thus, according to the above, the subscriber 21 who expects important messages from specific callers can make sure those messages are received before other messages by specifying, through the user interface, the telephone numbers which formulate the priority list for the urgent messages and which are stored in memory 40. Thus, subscriber 20, once having prepared the list 40, can now access the voice mail system 25 and upon accessing the system and requesting a message playback would hear a prompt as follows -- "You have X urgent messages." Then the X urgent messages would be played by the system. Then another prompt would continue as -- "You have four new messages." These obviously would be messages which would not be urgent. This feature allows the subscribers to feel as if they are hearing the most important information first and is also a useful feature for use by subscribers.

For an example of the system operation for a calling party reference is again made to FIG. 2. Assume calling party 31 makes a connection to the voice mail system 25 as evidenced by connection 30. The calling party 31 has called subscriber 21 who is not at his extension and therefore the calling party wishes to leave a message for subscriber 21. In regard to such phone mail systems 25, if a calling party cannot contact subscriber 21 directly he will then be connected to the voice mail system 25. In this system the calling party's telephone number or ANI is immediately transferred by the PBX to the voice mail system 25 where it is stored in register 26. The voice mail system stores the calling party's number in register 26. Now assume the calling party wishes to leave a message for subscriber 20, as is typical operation in most systems. The voice mail system makes a detection of the urgent message request by module 35 and automatically accesses the priority list for priority callers as stored in memory 40. The system performs a search of memory to compare the calling party's ANI, as stored in module 26, with each number stored in the priority list 40. If there is a favorable comparison made, via comparator 41 then the output of the comparator updates a counter 42. The comparison indicates that a priority urgent message is to be stored and may also transfer the telephone number or ANI number to the store message module 46. The urgent counter indicates that this is a first or a second or a third urgent message which again is directed to the playback to subscriber module 48 which is coupled to the stored message module 46. The stored message module 46 has a plurality of stored messages which, for example, indicate to the subscriber 20 that you have one urgent message, you have two urgent messages and so on. The number of urgent messages is stored in the urgent message counter 42. The telephone number of the calling party may also be directed to the store message module 46. In this manner the subscriber can be notified that the urgent message came from a particular calling ANI number 26. This is another feature which may be implemented by this system. As indicated above, the calling party, after dialing in the urgent message indication, now proceeds to leave a voice mail message for subscriber 20 as is conventional.

Let us assume, as indicated above, that the calling party 30 compares favorably by the urgent detector 35 and now proceeds to leave a message which is stored in store message module 46 and may be stored in digital or analog form and played back to the subscriber through the CODEC 45 or otherwise. The subscriber 21 now accesses his voice mail system by again dialing in his PIN number 50 and by further depressing a single key for message playback. This function is contingent upon the type of system utilized. As one can understand, the PBX system knows exactly which subscriber is requesting service when the subscriber goes off hook. The system knows exactly which of the subscribers, as 21, is off hook and therefore which subscriber is requesting a service request. The PBX network 102 sends the requesting subscriber 21 a system dial tone via the service circuits 108. The subscriber 20 hears the dial tone and now dials in a code indicating that he wishes access to the voice mail system. The PBX connects the subscriber 21 to the voice mail system 25 which sends a beep or other tone to the subscriber indicating that he has been so connected. The subscriber 20 may now press the # key and dial in his PIN number 50 to request message playback or vice versa. As soon as the subscriber is verified by means of his PIN number, the system verifies that the proper subscriber with the proper PIN number is requesting message playback and gives access to the stored message module 46. The urgent counter 42 has stored the number of messages that were received by the subscriber and which are designated as urgent. In the above example this is one message. In any event, the first thing that the subscriber hears is a prompt stating that you have one urgent message. The urgent message, which is stored in stored message 46 is then played back immediately to the subscriber. Any other stored messages which would be normal messages would also be counted by equipment not shown and existent in conventional phone mail systems which would indicate to the subscriber thereafter the number of actual new messages received and stored. Then a prompt would indicate to the subscriber that you now have four new messages after the subscriber has received the urgent messages, as indicated above. This operation regarding new messages and the prompts are employed in existing voice mail systems and are implemented in the prior art.

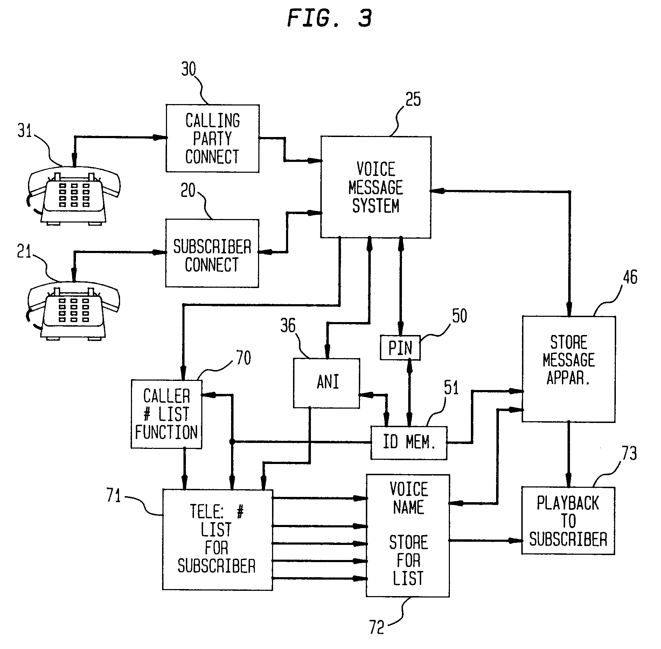

Referring to FIG. 3, there is shown still another system operation or feature which can be implemented due to the transmittal of the ANI information from the PBX network 102 to the voice mail system 25. It is of course understood that both the voice mail system and the PBX network are processor controlled. In the block diagram of FIG. 3, a subscriber 21 is connected to the voice mail system 25 via the PBX network via the subscriber connection 20. Subscriber 21, can now pre-record through the user interface the telephone numbers and the actual names of desired callers from whom frequent messages are received. Subscribers, as 21, would then hear pre-recorded names announced in the message header. For example, the voice mail system would announce to a subscriber that the first message is from James Smith and was received at 2 o'clock on Saturday, January 26th. The name James Smith or any other name would have been pre-recorded with the caller ANI by the subscriber 21 at some earlier time. The operation of the system is as follows. The subscriber 21 again makes a connection through his subset to the voice mail system and receives acknowledgement from the voice mail system that such a connection has been made. The subscriber now presses # and dials in a PIN number which is his personal identification number and which is received by module 50. This number is compared with calling number stored in the ANI register 26 or verified by the location 21 or otherwise when the subscriber accesses the system.

The subscriber's personal identification or PIN number which is stored in register 50, as well as his calling number, which is stored in register 26, can be compared and verified in the ID memory 51 that subscriber 21 is in fact a valid subscriber and access to the system is therefore given. This is important as subscriber 21 may wish to receive stored messages or implement some other function. In the case of FIG. 3 the subscriber will now dial in specified reserved digits to indicate to the voice mail system that the subscriber desires to identify names of callers with telephone numbers. This function is recognized by module 70 where module 70 decodes the digits dialed in by the subscriber and recognizes the special feature which the subscriber wishes to implement.

Upon informing the voice mail system 25 that the subscriber wishes to prepare a list of numbers, the voice mail system now connects the subscriber 21 to memory 71, which memory 71 may be part of the major memory and essentially consists of a designated number of locations for each system subscriber. The subscriber 21 now via the subset dials in telephone numbers which he desires to store. The subscriber, after dialing in a telephone number, would receive a prompt from the voice mail system indicating as to whether or not this telephone number is to be associated with a calling party's name. Thereafter the subscriber would indicate the name of the calling party, such as James Smith or Yvonne Libraty and so on. Thus this pre-recorded name for a desired caller, is associated with the telephone number that was dialed in. The voice name is stored in the name store list 72 to enable playback of the name associated with the stored telephone number when that calling party implements a call. As seen in FIG. 3, the name store list is then directed to the playback interface module 73 which goes to the store message apparatus 46 which interfaces with the subscriber subset.

The operation of the system for a calling party as 30 will now be explained. The calling party 30 makes a connection to the phone mail system after attempting to call subscriber 20 who is not available. In this instance the calling party will be connected by the PBX to the voice mail system 25. The calling party's ANI number automatically gets transferred to register 26. The calling party desires to leave a message for the subscriber 20 and the phone mail system now proceeds to connect calling party 30 to the message storage apparatus to enable the calling party 30 to present a message which will later be heard by the subscriber 20. The ANI storage module 26 has the calling party's 30 number stored therein and the voice mail system via the internal processor implement a search of the telephone number list in memory 71. This search is conducted to determine whether the calling party's ANI number 26 is a stored number in list 71. Thus a search of numbers stored in list 71 is made. If the number is stored in list 71, a favorable comparison is made and the system proceeds to the name store for list 72 to determine the name associated with the compared number. This name is automatically forwarded to the message store apparatus at the location where the present message is being stored, thereby the stored message apparatus receives the name and telephone number of the calling party. The other information regarding the time and date of the call is automatically implemented by the system, as well as the order that the message was received. Thus, the calling party 30 has his actual name directed to the store message apparatus. When the subscriber 21 desires to access his messages he will again be connected to the voice mail system whereupon he will enter his PIN number which will be recognized via module 50 and he will then dial in a request for his messages. Immediately he will hear and be informed that calling party 30 has left a message by a header which would be transmitted to subscriber 20 which would for example state "Message 1 from Yvonne Libraty was received at 2:00 p.m. on Saturday, January 16th." The name Yvonne Libraty, as indicted above, had been pre-recorded by subscriber 20 at some time in the past.

As indicated with regard to FIG. 2, Yvonne Libraty may also be on the priority list 40. When she accessed the system may have indicated that the message to be stored is an urgent message and therefore her message would have been placed as one of the first messages and the header would have indicated an urgent message status as well. It is of course understood that the urgent message priority list, as described in FIG. 2, can be implemented simultaneous with the telephone number list which includes pre-recorded names for individual subscribers.

Both systems operate with the recognition of the ANI number as was transmitted from the PBX or telephone switching system to the phone mail system via a trunk link or some other connective link.

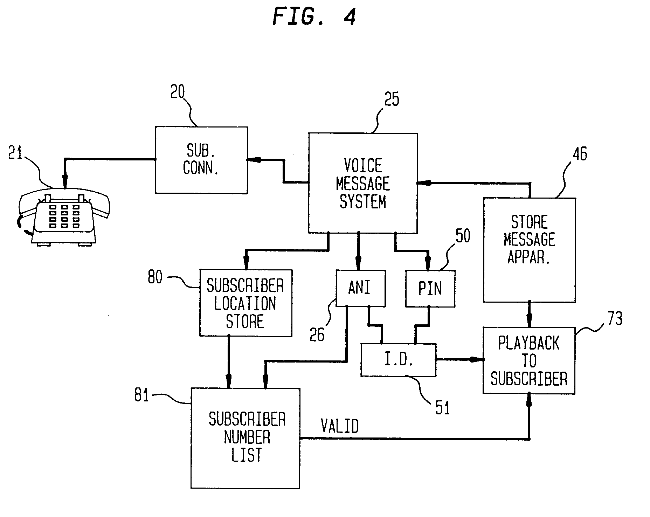

Referring to FIG. 4, there is still another feature which the system can implement. In this feature a subscriber associated with the subset 21, may wish to access his phone mail system from other telephones. The locations are remote from the actual subscriber's subset 21 which is located at the PBX and which is identified by the system with the subscriber's PIN number. In many voice mail systems, a subscriber, when accessing the voice mail system and when wishing to obtain his messages, merely has to press one digit on his telephone after connecting to the voice mail system and after dialing in his PIN number. For example, when a subscriber as 20 calls the voice mail system 25 from his legitimate extension, the subscriber can log on to the voice mail system by depressing a single key, such as the # key and then entering his PIN number or his password. Such systems are well known and such techniques can be implemented in many different ways. In any event, a subscriber may not be at his extension but may still wish to access and receive voice mail messages and desires do so from an extension which the system would not recognize as being the subscriber's extension. For example, the subscriber may wish to receive his voice mail messages from his car phone or from his home, and so on. In this manner, subscriber 20 is again connected through the PBX to the voice mail system 25. The subscriber then dials control digits which indicate to the system that the subscriber wishes to access a subscriber number list or subscriber number list memory 81. This enables the subscriber to enter a list of telephone numbers to be associated with the subscriber and to enable the subscriber to receive phone mail messages from any location which is associated with the telephone numbers entered by the subscriber in the number list memory 81. In this manner the subscriber now proceeds to enter telephone numbers into subscriber list memory 81 at which he would desire to receive telephone calls. This is done from his designated extension and subset 21. In order to do so the subscriber must first, of course, enter his PIN number which is received by module 50 and which can also be compared with his ANI number in module 26 to produce a valid ID via I.D. module 51. As indicated above, the system will recognize that subscriber 21 has the correct PIN number as entered. The subscriber now enters into the system a new list of telephone numbers from which he desires to receive his voice mail. The system stores these telephone numbers as indicated in memory module 81.

Now assume that during the course of the day the subscriber has received many voice mail messages from various calling parties, as described above, and wishes to play back the messages. The subscriber is physically at a location indicated by a telephone number previously entered into and stored in the subscriber number list memory 81. In this manner the subscriber again accesses the voice mail system 25 as if he were an ordinary calling party. Thus the system does not know that the subscriber 20 is a valid system subscriber. In any event, the voce mail system 25 correctly assumes that all calls received are from an outside caller. Thus, when subscriber 20 now attempts to receive his mail from another telephone, he will then inform the system that he wishes to have his messages played back. The system would indicate -- Please press the pound key if you are calling from your own extension or a pre-specified number. The subscriber would then press the # key and dial in his PIN number. The system would search the subscriber number list in memory 81 and if the PIN number was correctly identified and an authorized number appeared in list 81 which compared favorably with the ANI number, as stored in register 26, the system would enable the subscriber to receive stored messages via module 46. Thus the system would verify that this subscriber is a valid system subscriber and the number he is calling from was a number which was entered into the subscriber number list 81. Thus the subscriber now, by pressing a single digit key such as the # key, will have access to all his voice mail messages as in normal operation.

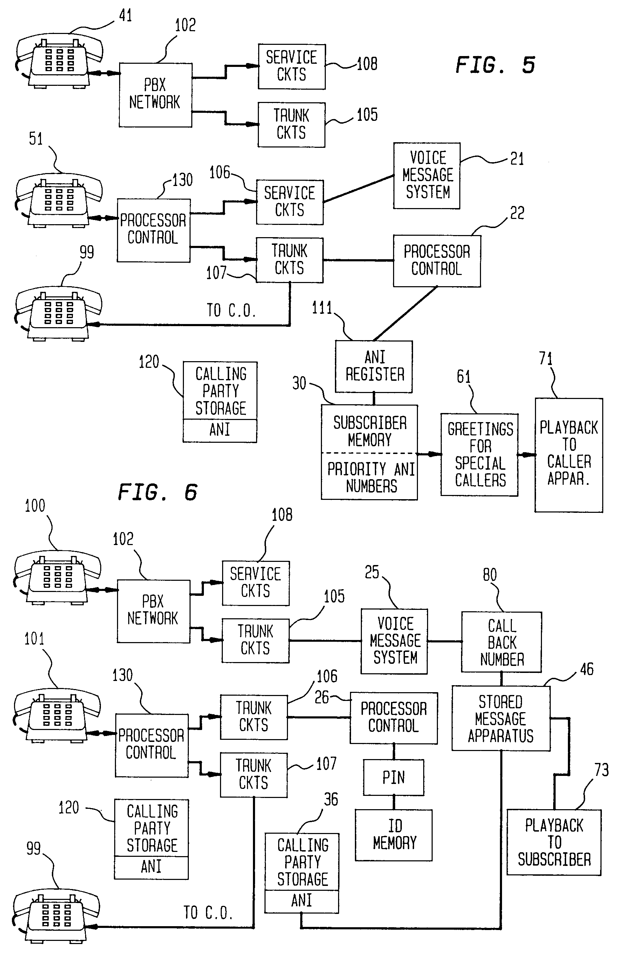

In Figure 5 there is shown a block diagram explaining the operation of a feature allowing specific greetings to be played back to callers depending on ANI numbers. Thus a subscriber is represented by 51 and has accessed the voice mail system 21 by means of the PBX network 25 as previously described in Figure 1.

The subscriber 51 enters into register 30 subscriber memory a list of calling party numbers for which specific greetings should be played (selective handling). To accomplish this, the voice mail system, via register 61 plays a prompt to the subscriber such as "Please enter the telephone number for which a specific greeting should be played".

The subscriber, after dialing in a telephone number, would receive a prompt from the voice mail system requesting a greeting message be recorded and associated with this calling party number. Thus the telephone number for a specific greeting is stored in register 30 priority ANI numbers and the greeting message for each specific caller is associated with the telephone number that was dialed in. The recorded greeting is stored in the greetings for specific callers register 61 to enable playback of the greeting associated with the stored telephone number when that calling party initiates a call.

There is now a stored list which indicates that if a caller having a number stored in memory 30 calls, a greeting attached to his number in register 61 will be played to the caller instead of the universal greeting received by regular, non-specific callers.

The operation of the system for a calling party 41 will now be explained. The calling party 41 makes a connection to the voice messaging system 21 after attempting to call subscriber 51 who is not available. In this instance, the calling party will be connected by the PBX to the voice mail system 21. The calling party's ANI number automatically gets transferred to register 111 as previously described. The voice mail system implements a search of the ANI number in register 111 against the telephone number list in memory 30. If the number is stored in list 30, a favorable comparison is made and the system proceeds to the greetings stored for list 61 to determine the greeting associated with the compared number. This greeting is forwarded to the playback to caller apparatus 71 which plays back the specific greeting to the calling party 41. Thus, subscribers wishing to impart specific confidential information to specific callers may do so.

In Figure 6, there is shown a single block diagram explaining the operation of a feature Single Digit Callback for ANI. A calling party at station 31's ANI number is passed from 120 of PBX 102 to Voice Messaging System 25, and stored in Calling Party ANI register 36, as described previously. Furthermore, the calling party can leave a message for subscriber 21 with the Voice Messaging System 25. Such message can be stored in Stored Message Apparatus 46, as described previously. Along or in association with the stored message, a message header can be stored, to contain information such as time, date, and calling party ANI number in the Stored Message Apparatus 46. The message header containing the date and time of the message is conventional in prior art of Voice Messaging Systems.

Subscriber 21 can later call the Voice Messaging System 25, using PBX network 102 to make connection 105. After supplying the PIN to gain access to his messages in the Stored Message Apparatus 46. As he accesses each message in the Stored Message Apparatus 46, the Voice Message System 25 plays the associated message header. The ANI number of the original caller party number, which was stored in the message header, is placed in the Callback Number register 80. After subscriber 21 listens to the message, the Voice Messaging System presents a voice prompt menu to the subscriber to call back the originator of the message. The subscriber can press a digit on Subscriber Station 21 to choose this option. The Voice Messaging System 25 uses the PBX network function of transfer calls by sending it the access code for transfer to external number, followed by the number stored in the Callback Number register 80. This will connect subscriber 21 to the original calling party 31, using trunk 107.

Thus, as one can see, the above-described features enable subscribers to a voice mail system to implement various control functions all of which depend upon the recognition of the ANI of a calling party. Basically, the above procedures pertain to a Voice Messaging System or voice mail system that has the capability of obtaining ANI information from the PBX or from a switching system. This information is obtained using common channel signaling communications protocol or by the simulation of a feature phone that can provide calling party information. The provision of calling party information is in widespread use and is available, for example, from the major telephone carriers, such as AT&T and so on. Once the ANI information is received by the phone mail or voice message system, the information is stored in a register. This information can be used as described above to implement the various above-described features. As one can ascertain, the elements required to implement the invention include the ability of the voice message system 25 to obtain the ANI calling party information. The system further has the ability to allow the subscriber to access the voice message system in order to dial in various telephone numbers with which the subscriber wishes to form a priority list for selected calling parties. Thus the subscriber determines who he wishes to receive priority messages from. The subscriber can further develop an urgent message list to enable priority subscribers who leave urgent messages to have these messages played back first. The system further enables the subscriber to dial in telephone numbers for a list including the voice playback of caller names associated with those telephone numbers. The system further enables the subscriber to record different telephone numbers so that he can receive voice mail messages from any one of a number of alternate locations other than from his actual extension.

The above-described techniques and features can be programmed by using conventional processors in existing systems. For example, as indicated, in the Rolm CBX9751 and the Rolm PhoneMail system, such information can easily be programmed to provide the above-described novel features. The CBX9751 system supports ANI and is capable of passing the ANI information to the PhoneMail system through an RS-232 link or trunk. This information, as indicated, now must be stored by the voice mail system, such as in the ANI register 26. For example, the voice mail system, as described above, currently provides single digit identification of the subscriber. When a subscriber calls the system from the subscriber extension, they can log onto the system with a single number key and followed by their PIN or password number. By further allowing the system to store additional telephone numbers in a subscriber list, as shown in FIG. 4, and by associating the subscriber list with the ANI storage in module 26, the above elements now allow the voice mail system to implement the single digit identification based on the ANI feature. Thus the system can also use the ANI to obtain priority messages from specific callers and make sure those messages are received before others by specifying, through the user interface, certain telephone numbers as high priority, as indicated above. The subscriber can pre-record, also through the user interface, names of external callers from whom frequent messages are received. In this manner subscribers would hear the pre-recorded names announced in the message header and this is also based on the ANI storage capability.

Thus, as one can ascertain, the ANI is used to implement desired features based on the fact that a subscriber can now provide a list of calling numbers to implement desired features. It is also understood that based on the transfer of the ANI one could also leave a specific message for a given calling number. For example, the memory would now hold a list of calling parties which will be compared with the ANI number to determine whether or not a calling party is on the list. Upon a favorable comparison one could access the store message apparatus and playback a pre-recorded message for that particular party. For example, the message may be directed to one's boss or some other individual whose ANI is compared with a number stored in the list. Thus the message may indicate, "Please call me at 3:00 o'clock on Thursday, June 26th" or any other message desired. There are many features which are capable of being implemented once the ANI number is transferred to the voice message system.

Thus, as should be apparent to those skilled in the art, and as indicated, there are many PBX switching systems or other exchanges which enable the transfer of the ANI information to remote locations. There are also many voice mail systems, all of which operate in different manners to effectuate the playback of messages via various procedures. All such systems can be operated in conjunction with the ANI number to implement the above-described features. One skilled in the state of the art would experience absolutely no problem in implementing the software or hardware, as indicated in the above specification. It is thus understood that the above-described embodiments and schematic diagrams are illustrative of the principles behind this invention and many alternate arrangements, as well as alternate programming or procedural techniques can be implemented by those skilled in the art without departing from the spirit and scope of this invention.

## Claims

1. In an electronic communication message system for store and forwarding voice messages to and from a telephone facility to enable a calling party to store a voice message for a system subscriber, said message system coupled to a private branch exchange (PBX) or central office (CO) to enable a calling party system subscriber or a non-subscriber calling party connected to said message system to store a message for said subscriber, said PBX or CO operative to store an Automatic Number Identification (ANI) indicative of the telephone number of said calling party, the combination comprising:
means for transferring said ANI number to said message system whenever a calling party is connected to said message system;
means for storing said transferred ANI at said message system;
memory means accessible by said telephone facility for selectively storing therein at least one number of a calling party;
means for comparing said ANI number with said stored number and upon a favorable comparison causing said message system to implement a predetermined operation solely dependent upon said favorable comparison.

2. The electronic communications message system according to Claim 1 further including:
means coupled to said message system for enabling a connected subscriber to enter a private identification number;
means responsive to said number for authenticating said subscriber as a valid subscriber;
means responsive to said authentication to enable said telephone facility to gain access to said memory means to selectively insert any desired number of a calling party according to said predetermined operation.

3. The electronic communications message system according to Claim 2 wherein said memory means has stored therein a list of calling telephone numbers indicative of calling party priority and wherein said selective feature enables the message left by a calling party on said list to be played back to said individual subscriber in any desired sequence with respect to other calling party messages left by calling parties not on said list.

4. The electronic communications message system according to Claim 2 wherein said memory means has stored therein a list of telephone numbers indicative of alternate subscriber locations from which locations said subscriber can received stored messages and wherein said selective feature enables said subscriber to receive a stored message from a telephone facility having a number on said list when requested by said subscriber.

5. The electronic communications message system according to Claim 2 wherein said memory means has stored therein a list of calling party telephone numbers, means coupled to said message system for storing a list of calling party names with each name corresponding to one of said calling party numbers and wherein said selective feature enables the name of said calling party on said list to be announced to said individual subscriber during message playback.

6. The electronic communications message system according to Claim 1 further including means coupled to said message system for decoding a subscriber request to determine which one of a given number of predetermined operations are to be implemented.

7. The electronic communications message system according to claim 2 wherein said memory means has stored therein a list of calling telephone numbers associated with specific greetings and wherein said selective feature enables calling party to receive a greeting recorded and stored specifically for said calling party during message-playback.

8. The electronic communications message system according to claim 2 wherein said memory means has stored therein a callback number associated with the header of a message left by calling party. Said selective feature enables called party to be connected to original message sender.

9. A method of implementing a subscriber selected feature for an electronic communication message system for store and forwarding voice messages to and from a subscriber telephone facility to enable a calling party to store a voice message for a system subscriber, said message system coupled to a private branch exchange (PBX) central office (CO) to enable a calling party connected to said exchange to access said message system to leave a message for a system subscriber, comprising the steps of:
forwarding the ANI of a calling party to said message system;
storing said ANI at said message system;
storing in memory a list of calling party numbers selected by a party to said system;
comparing said stored ANI with said number in said list and implementing a subscriber selected feature upon a favorable comparison.

10. The method according to Claim 9 wherein said subscriber selected feature incudes recording a voice message left by a calling party on said list at a priority basis upon said favorable comparison whereby said voice message is played back to a requesting subscriber prior or after to other voice messages.

11. The method according to Claim 9 wherein said subscriber selected feature includes authenticating said requesting subscriber when a calling party number is on said list as evidenced by said favorable comparison to enable a requesting subscriber to receive message playback at said listed calling party number telephone facility.

12. The method according to Claim 9 wherein said subscriber selected feature includes playing back to a subscriber the voice message name of said calling party on said list upon said favorable comparison when message playback is requested by said subscriber.

13. The method according to claim 9 wherein said subscriber selected feature includes playing back a specific greeting to a calling party upon favorable comparison when calling party is on said list.

14. The method according to claim 9 wherein said subscriber selected feature enables called party to be connected to original message sender.

15. The method according to Claim 7 wherein said calling party number is the telephone number of a system subscriber.

16. The method according to Claim 7 wherein said calling party number is the telephone number of a party who is not a system subscriber.

17. In an electronic communication message system for storing and forwarding voice messages to and from a subscriber telephone facility to enable a calling party to store a voice message for a system subscriber and said message system coupled to a private branch exchange (PBX) or central office (CO) to enable a calling party system subscriber or a external calling party connected to said message system via said PBX or CO to leave a message for a system subscriber, said PBX or CO operative to store an automatic number identification (ANI) indicative of the telephone number of said calling party, the combination therewith comprising:
means coupled to said message system for receiving and storing said ANI;
memory means for storing at said message system a plurality of calling telephone numbers selectively provided by a system party;
comparison means for comparing said stored ANI with said plurality of stored calling telephone numbers to provide a control signal upon a favorable comparison; and
means responsive to said control signal for enabling said message system to provide a selective feature upon said favorable comparison between said ANI and one of said stored calling telephone numbers.

18. The electronic communication system according to Claim 17 wherein said memory means has stored therein said list of calling telephone numbers indicative of calling party priority and wherein said selective feature enables the message left by a calling party on said list to be played back to said individual subscriber prior to the calling party messages having telephone numbers not on said list.

19. The electronic communication system according to Claim 17 wherein said memory means as stored therein a list of telephone numbers indicative of alternate subscriber locations from which location said subscriber can receive messages and wherein said selective feature enables said subscriber to receive a stored message from a telephone facility having a number on said list when requested by said subscriber.

20. The electronic communication system according to Claim 17 wherein said memory means has stored therein a list of calling party telephone numbers and means coupled to said message system for storing a list of calling party names with each name corresponding to one of said calling party numbers and wherein said selective feature enables the name of said calling party to be announced to said individual subscriber during message playback.

21. The electronic communication system according to Claim 17 wherein said memory means has stored therein said list of calling telephone numbers indicative of called party selective processing and wherein said selective feature enables a specific greeting stored in said memory to be played back to said calling party.

22. The electronic communication system according to Claim 17 wherein said memory means has stored therein the ANI number of the original calling party and wherein said selective feature enables the system subscriber to initiate a callback to said calling party by pressing a digit on the telephone.

23. The electronic communication system according to Claim 17 further comprising:
identification authenticating means operative to compare a system subscriber's inserted code with said subscriber's extension to enable access to said memory means for enabling said subscriber to selectively enter calling party telephone numbers to be stored in said list.

24. The electronic communication system according to Claim 17 further comprising:
means for recognizing any one of a plurality of said selected features by decoding predetermined digits indicative of said feature as dialed in by said system subscriber.

25. The electronic communication system according to Claim 17 wherein said calling party number is a number indicative of a system subscriber.

26. The electronic communication system according to Claim 17 wherein said calling party number is a number indicative of a non-system subscriber.
